(19) Europäisches Patentamt

European Patent Office

Office européen des brevets

(11) **EP 1 537 405 B1**

(12) **EUROPEAN PATENT SPECIFICATION**

(45) Date of publication and mention
of the grant of the patent:
**07.06.2006 Bulletin 2006/23**

(51) Int Cl.:
***G01N 19/04*** (2006.01)

(21) Application number: **03795565.5**

(86) International application number:
**PCT/US2003/021201**

(22) Date of filing: **08.07.2003**

(87) International publication number:
**WO 2004/025280 (25.03.2004 Gazette 2004/13)**

(54) **APPARATUS FOR MEASURING ADHESION OF GELLED POLYMERS**

VORRICHTUNG ZUM MESSEN DER ADHÄSION VON POLYMERGELEN

APPAREIL DESTINE A MESURER L'ADHESION DE POLYMERES GELIFIES

(84) Designated Contracting States:
**AT BE BG CH CY CZ DE DK EE ES FI FR GB GR
HU IE IT LI LU MC NL PT RO SE SI SK TR**

(30) Priority: **12.09.2002 US 241877**

(43) Date of publication of application:
**08.06.2005 Bulletin 2005/23**

(73) Proprietor: **3M Innovative Properties Company
St. Paul, MN 55133-3427 (US)**

(72) Inventor: **KING, Rex, M.
Saint Paul, MN 55133-3427 (US)**

(74) Representative: **Vossius & Partner
Siebertstrasse 4
81675 München (DE)**

(56) References cited:
**EP-A- 1 219 949          US-A- 3 019 644
US-A- 4 080 825          US-A- 4 934 185**

- **PATENT ABSTRACTS OF JAPAN vol. 005, no. 113 (P-089), 13 November 1981 (1981-11-13) & JP 56 108937 A (TOYODA GOSEI CO LTD), 28 August 1981 (1981-08-28)**
- **PATENT ABSTRACTS OF JAPAN vol. 009, no. 203 (P-381), 21 August 1985 (1985-08-21) & JP 60 066136 A (TATSUTA DENSEN KK), 16 April 1985 (1985-04-16)**

**Description**

**Background Of The Invention**

Field of the Invention

The invention relates to measurement of adhesion of gelled polymers to surfaces including plastic surfaces of connectors for cables and wires that form telecommunications and power distribution networks. More particularly this invention relates to an apparatus for measuring the strength of the adhesive bond of cured sealing gels to plastic.

Description of the Related Art

Many of the technologies available to modem society find their origin in the application of electricity and electronics. The driving force of electricity coupled with the versatility of electronics has produced, for example, the communications, automation and computer industries. There are many specialized fields associated with each of these industries. Communications may be divided into space and satellite communications, commercial radio and television, data communications, navigation systems, radar and police and aircraft communications, to name but a few. A common feature of these communication systems is the development of networks linking together a multitude of transmitting and receiving sites. Network links may be hard wired or in the form of radio signals, with most communications systems requiring both types. Much of the infrastructure of communication networks exists in open environments at the mercy of inclement weather and climatic events including rain, hail, and snow storms. Electricity distribution networks and telephone communications networks are particularly vulnerable to erratic changes in climate. Some network components, such as cables and wire connectors may be particularly susceptible to attack that interferes with network and signal integrity in adverse weather conditions. Attack of network connectors by contaminants takes a variety of forms of which ingress of liquids or moisture is one of the most common. The presence of seams or gaps in a connector will provide access to moisture and other liquid contaminants that could compromise network integrity by causing a short circuit. For this reason, it has become common to use sealed connectors at relatively unsheltered network connecting sites, such as those used by telephone companies to provide service from the telephone line twisted pair to an individual household. The network to home connection typically resides inside an enclosure or pedestal box mounted at ground level, and exposed to the elements.

Evidence of the benefits of sealed connectors in telecommunications networks is given in United States Patent No. 5,975,945 describing a network interface device (NID) between a cable and a local network including a number of telephones. A conventional 5-pin plug-in protector provides electrical isolation when inserted in the NID to form electrical connections. Water resistant gel, applied to each plug-in protector, forms a water-resistant seal to inhibit moisture penetration into the protector, thereby allowing it to be used outdoors, even though, under conventional NID specifications, plug-in protectors are limited to indoor applications and special potted protectors are required for outdoor use.

United States Patent No. 5,079,300 addresses the use of gel sealants that also prevent corrosion of e.g. connectors used in telecommunications networks. Suitable gel materials include silicone compositions that environmentally seal and protect substrates such as electrical connections, bare electrical conductors and electrical splices.

Requirements for gel sealants include the need to protect and insulate electrical connections and splices at temperatures that could vary from -40°C to 60°C or more. Gel sealants should provide moisture and watertight containment for wire junctions as well as preventing rodent and insect damage. The need to reenter a pedestal box to alter or repair wires, and connections between wires, requires that cured gels withstand considerable and repeated deformation during making and breaking of connections, for example, to modify service to a consumer or to re-route a telephone signal. It should be possible to insert and withdraw connecting wires without significant transfer of gel sealant to the bare wire or loss of sealant from the socket from which the wire is withdrawn. It is desirable that gel sealants, meeting these requirements, possess high elasticity and elongation related to high deformability. Suitable materials have higher cohesive strength than adhesive strength yet maintain sufficient adhesion to connector surfaces that the gel remains substantially within the connector during retermination. Hydrolytic stability and stability against thermal and oxidative degradation lower the probability of gel mass shrinkage, which could open up channels for ingress of moisture and fluid contaminants.

Known gel materials, for use in wire and cable connectors, include those derived from polyurethane and silicone polymers as revealed in United States Patent No. 5,934,934 describing a gel filled connector for connecting electrical wires. The connector includes a housing to receive a plug that includes connecting contacts. A colloidal gel, of either polyurethane or silicone may be used in the housing to provide environmental protection for connectors, such as telephone jacks. Connectors wrapped with cured strips of sufficiently cohesive gel provide further protection. As an added feature, the colloidal gel contains particles that will absorb electromagnetic radiation.

United States Patent No. 4,824,390 describes an electrical connector, especially for telecommunications, including an electrical insulating block having an array of cavities filled with an electrically insulating silicone gel surrounding electrical connections and contacts disposed in each of the cavities. The gel is deformable and penetrable at ambient temperatures to allow insertion of external electrical contacts into cavities to enable formation of electrical connections with the contacts in the cavities.

Recent developments of cured polymer compositions led to a preference for silicone materials that provide gel structures for filling or covering connectors of the types described previously. Connector cavities may first be filled with curable compositions that cure to gels when heated at elevated temperature. Information relating to thermally cured silicone compositions may be found in a number of references including United States Patent No. 4,337,332 disclosing a latently curable organosilicone composition stabilized against premature gelation by the presence of an amount of an unsaturated amide that is sufficient to inhibit gelation of the composition at low, ambient or room temperature but insufficient to prevent hydrosilation at an elevated temperature. United States Patent No. 4,511,620 describes an organosiloxane gel that cures by a hydrosilation reaction when heated.

Thermal curing involving a hydrosilation mechanism is known for providing silicone coatings and adhesives as described in United States Patents U.S. 5,741,552, U.S. 5,466,532 and U.S. 6,004,679. Such materials typically comprise a vinyl-terminated polydiorganosiloxane; a hydrogen-substituted polydiorganosiloxane; and a hydrosilation catalyst. United States Patent No. 5,059,484 describes gum-type organosiloxane elastomers having increased adhesion to organic polymer substrates following thermal curing using a platinum-catalyzed hydrosilation reaction in the presence of an amount of silanol-functional polydiorganosiloxane.

A disadvantage of thermally cured gels is the need for curable compositions to withstand elevated temperatures during conversion to cured polymer. Also, key reactants typically require separation into two parts to be mixed together just prior to curing. A reaction inhibitor may be required to prevent premature crosslinking after mixing in the presence of a thermally activated hydrosilation catalyst. Some of these problems may be avoided using curable compositions including a photoreactive hydrosilation catalyst rather than its thermally activated counterpart.

Previous studies described in U.S. 4,510,094, U.S. 4,530,879, U.S. 4,600,484, U.S. 4,916,169, U.S. 5,145,886, U.S. 6,046,250, EP 398,701, EP 561,893 and Mayer et al (J. Polymer Sci., Part A: Polymer Chem.; Vol. 34, No. 15, p. 3141-3146 (1996)) reveal the use of hydrosilation photocatalysts for curing silicone compositions containing vinyl and hydrosilyl functionality. There is nothing to suggest application of photocured silicone compositions as coatings or gels suitable for protecting connectors used in electrical networks.

Mayer et al (J. Polymer Sci., Part A: Polymer Chem.; Vol. 34, No. 15, p. 3141-3146 (1996)) presents findings from investigating trimethyl ($\beta$ - dicarbonyl) Pt (IV) complexes as alternatively useful photocatalysts for the radiation-activated hydrosilation of silicone polymers. Typical silicone compositions were given as Si-H/Si-vinyl (SiH:Vi) molar ratio of 1.7 of two commercial silicones RP1 and RP2 with catalyst added to obtain 250 - 300 ppm elemental platinum in the mixture. Films were deposited with a controlled thickness of 20 - 25$\mu$m on a KBr crystal window and exposed to the filtered HPK125W (UV) light from a medium pressure UV lamp. Disappearance of the Si-H frequency was followed using IR spectroscopy. The paper gives no information concerning protective sealing gels.

The previous discussion shows that gel sealants may be used for environmental protection of connector systems used in electrical and electronic networks. Room temperature curing and elevated temperature curing of silicone-based gel compositions are known, including those curing via a hydrosilation mechanism. Both thermal catalysts and photocatalysts have been described for promoting hydrosilation during curing of polysiloxane compositions. Regardless of information available concerning preparation and curing of polysiloxane compositions for a variety of applications, a need still exists for improved adhesion of cured polymers to organic resins that may be selected as molding materials for wire conductors and optical fiber connecting plugs and sockets used in network interface devices. Sealing gels with improved adhesion extend the lifetime of interconnect devices because they are less susceptible to displacement from connector sockets by repeated insertion and removal of plug elements.

Document US-A-4 080 825 discloses an apparatus used to test the strength of a glue bond joint connecting two sheets of paperboard or similar sheet-like material. The apparatus automatically produces the bond, duplicating the production process, and then forces the sheets apart by moving the sheets around a bar and measuring deflection of the assembly to which the bar is attached. Documents JP 56 108937 A and JP 60 066136 A disclose peeling measuring devices.

**Summary of the Invention**

The present invention provides an apparatus for measuring adhesion of a gelled polymer to a surface, the apparatus comprising a support having a low friction contact surface spaced apart from a clamp used to hold a blade. The support may include a first rail opposite and parallel to a second rail. Each rail has a low friction coating to provide the low friction contact surface for sliding contact of the planar contact face. The blade has a knife-edge aligned in a horizontal plane with which the blade makes an angle of less than 25°. A block, having a planar contact face in the horizontal plane, is adapted for sliding contact with the low friction contact surface of the support. An adhered layer of the gelled polymer has an adhesive bond to the planar contact face to form an interface therewith. The apparatus includes a connection, such as a wire or string, from the block to a motion generator to produce vertical motion of the connection. A force-measuring gauge is included with the motion generator. Use of a motion converter, such as a rotary pulley, alters the vertical movement of the connection to a horizontal movement to move the block along the support towards the clamp. This causes the knife-edge to penetrate the interface to disrupt the adhesive bond between the layer of gelled polymer and the planar contact face. The force-measuring gauge indicates the strength of the adhesive bond as the gelled polymer passes over the blade.

Definitions

The following definitions clarify the meaning of terms used to describe the present invention.

The terms "photopolymerization" or "photocuring" or the like, as used herein, describe crosslinking of curable compositions using a catalyzed reaction involving a photocatalyst.

Terms such as "catalyst," "photocatalyst" and "hydrosilation photocatalyst" refer to substances of which a small proportion notably affects the rate of a chemical reaction without the catalyst itself being consumed. Catalyst concentrations may be stated as wt%, or as parts per million (ppm) for greater accuracy.

The term "photothermocurable" refers to sealant compositions that cure by exposure to suitable actinic radiation optionally followed by heating for full crosslinking.

Terms such as "sealant," "high viscosity sealant," "sealing gel" and the like may be used interchangeably to refer to the product of crosslinking a curable composition using either a thermally activated hydrosilation catalyst or a hydrosilation photocatalyst.

Unless stated otherwise concentrations of components are stated in terms of percent by weight (wt%) of solvent-free compositions.

**Brief Description of the Drawings**

Notwithstanding any other forms, which may fall within the scope or the present invention, preferred forms of the invention will now be described, by way of example only, with reference to the accompanying drawings in which:

Figure 1 is a schematic side view of an apparatus useful for measuring adhesion of highly viscous gelled polymers to planar surfaces.

Figure 2 is a schematic plan view of an apparatus useful for measuring adhesion of highly viscous gelled polymers to planar surfaces.

Figure 3 is a partially cut-away cross sectional view showing positioning of a knife-edge and a mass of gelled polymer in preparation of adhesion measurement.

Detailed description of the invention

Adhesion Measurement

A mechanical method for measuring separation of one material from another provides a discriminating test for adhesion of highly viscous sealants to solid substrates. Test results show the level of adhesion at the interface between a controlled amount of sealant, and the solid substrate to which it is applied. Measurements may be quantified in terms of the force required for interfacial separation along a given length of interface as follows:

$$\text{Adhesion} = \frac{\text{Force Applied for Interfacial Separation}}{\text{Length of the Interface}}$$

Measurement of the adhesive properties of highly viscous sealing gel samples is difficult to achieve because typical visco-elastic properties of sealant materials makes them compliant and hard to grip. A conventional approach to measuring adhesion of highly viscous sealants involves the use of peel tests. After attachment of a sealant to a test substrate, it is possible to run peel tests if one end of the sealing gel may be gripped, e.g. between a pair of mechanical jaws, and separated from the substrate while measuring the force of separation. This peel test method is effective for measuring adhesion only when the cohesive strength of the highly viscous sealing gel is greater than the adhesive strength at the interface sealant/substrate interface. When cohesion is less than adhesion the gel will fail cohesively giving an erroneous adhesion-to-substrate reading because the interface remains intact.

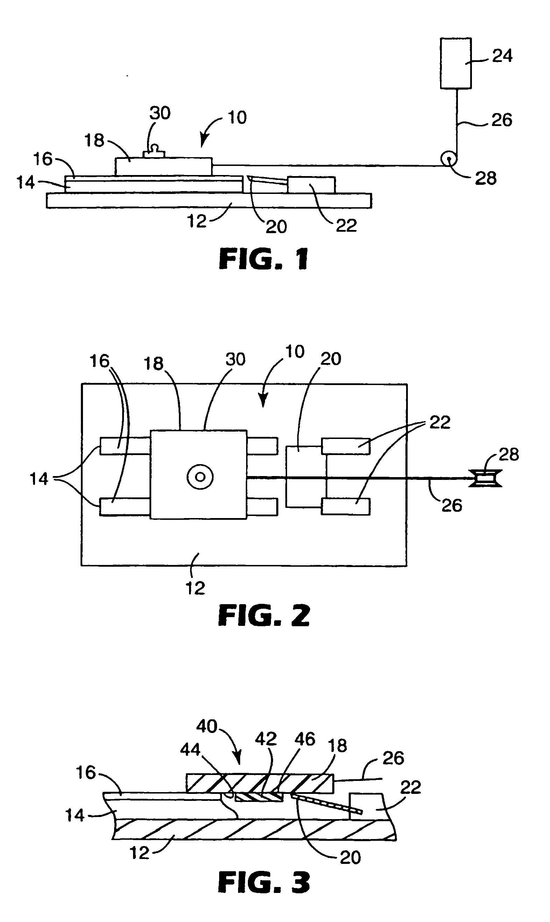

Interfacial adhesion measurement according to the present invention overcomes problems encountered with standard peel tests by concentrating the application of force at the demarcation line between a sealant layer of controlled dimensions and the substrate to which it is applied. Figure 1 and Figure 2 provide a schematic side view and schematic plan view respectively of equipment required to measure adhesion of highly viscous sealants to selected substrates, preferably plastic substrates. The equipment is a fixture **10** designed for use with conventional peel testing equipment such as a well-known Instron Peel Tester. A metal support **12** provides a fixed base for attachment of the test assembly that includes a pair of steel rails **14** having a surface layer **16** of low friction material such as TEFLON® . A low friction material **16,** applied to the steel rails **14** facilitates horizontal movement of a plastic test block **18** positioned to slide along the rails **14** towards a knife-edge **20** that is secured between a pair of shortened beams **22.** The knife-edge **20** may be a sharpened blade, such as a box cutter blade or razor blade, 5.5 cm long, set at an angle of 20° from horizontal. The sharpened edge of the knife-edge **20** lies in the same horizontal plane as the interface formed between the surface of the plastic test block **18** and a layer of highly viscous sealant (not shown). This arrangement concentrates the application of force to cause preferential crack initiation and disruption of adhesion at the interface between the sealant and the surface of the test block **18.**

Movement of the plastic test block **18** along the steel rails **14** occurs through coupling the test block **18** to the vertically positioned load cell **24** of a conventional Instron tester. Mechanical or adhesive coupling may be achieved using a filament **26,** such as a wire or string, tied between the load cell **24** and front top portion of the test block **18.** The filament **26** passes over a rotary pulley **28** positioned in the path between the load cell **24** and the test block **18.** Preferably the pulley **28** lies substantially in the same horizontal plane as the test block **18** to convert the vertical force produced by the Instron tester into a horizontal force needed to pull the test block **18** and attached sealant sample towards the knife edge **20.** A weight **30,** placed on the test block **18** contributes to smooth, even movement of the block **18** along the steel rails 14. Measurement of adhesion for samples according to the present invention required a tensile-compressive load cell **24** having a maximum capability of 150g.

Adhesion data was collected, by recording the force applied to the load cell **24,** for a selected sample displacement distance or a fixed amount of time, after contact between the knife-edge **20** and the highly viscous sealant sample. A stereo, low power microscope may optionally be placed to observe the knife edge **20** using a 10X to 40X magnification to provide visual qualitative evidence of separation, by loss of adhesion, of sealant samples from the surface of the test block **18.** Lack of planarity of the surface of test block **18,** to which the sealant is applied, will introduce error into the measurement due to the probability that the knife-edge **20** will deflect from its intended position thereby penetrating the mass of sealant. This causes the data recorder to display the force to penetrate the sealant rather than the force of interfacial adhesion.

Figure 3 provides a cross sectional schematic view of a test sample **40** according to the present invention including a rectangular, plastic test block **18** having a layer of highly viscous sealant **42** applied to a planar surface **44** of the test block **18.** Adhesion measurement requires that the sample of highly viscous sealant **42** face downward towards the knife-edge **20.** A test sample **40** preferably consists of the rectangular block **18** having a planar surface **44,** approximately 20cm long and 5cm wide, and a layer, approximately 2.5cm square, of highly viscous liquid sealant **42** placed approximately at the center of the longitudinal axis of the planar surface **44** so that the edges of the sealant square adopt a parallel relationship with the sides of the planar surface **44.**

The test set-up requires an initial separation of 5mm between the viscous sealant **42** from the knife-edge **20.** This provides a lead-in distance before the knife-edge **20** contacts the interface **46** marking the boundary between the viscous sealant **42** and the planar surface **44** of the plastic test block **18.The** test set-up further requires a gap of no more than 0.1mm between the knife-edge **20** and the planar surface **44** of the test block **18.** In this position, the knife-edge **20** should disrupt interfacial contact between the viscous sealant **42** and the planar surface **44** rather than penetrate the bulk of the viscous sealant **42,** which causes measurement error.

After initial set-up a test was conducted using a crosshead, attached to the load cell **24,** which was set to move at a slow speed preferably of 1.0mm/min. Conversion of the vertical movement of the load cell **24,** described previously, produced a resultant horizontal force and motion of the test sample **40** for contact with the knife-edge **20.** It is preferred that sample preparation produce a layer of viscous sealant **42** that presents a clean advancing edge and substantially simultaneous contact of the sealant **42** at all points along the length of the knife-edge **20.** Uniform contact of this type is effective for initially disrupting the adhesive bond and promoting separation of the viscous sealant **42** from the planar surface **44** as the test sample **40** traverses the knife-edge **20.** In consideration of the visco-elastic response of the viscous sealant **42,** it is important to use low crosshead speed to allow the crack, produced by adhesive bond disruption, to propagate along the interface **46,** rather than deflect into the sealant **42** layer, which alters the measurement from one of adhesion to one of sealant penetration.

Movement of the test sample **40** over the knife-edge **20** was detected by monitoring equipment to produce a print-out corresponding to initial traversal of the 5mm gap followed by an onset force in response to contact of the viscous sealant **42** with the knife-edge **20.** The load increased to a maximum value as the sealant **42** separated from the interface **46.** The adhesive force was calculated by subtracting the onset force from the maximum load value. Adhesion values may be expressed in terms of force per unit length e.g. grams/cm or Newtons/100mm as reported herein.

Example 1 to Example 8 - Thermally Cured Gel Compositions

Table 1 provides compositions for curable silicone compositions containing a silicone oil (BAYSILONE fluids M40 - M899 available from GE/Bayer Silicones GmbH, Leverkusen, Germany), a vinyl substituted polysiloxane (SILOPREN U65 available from GE/Bayer Silicones, Ekrath, Germany), a hydrogen substituted polysiloxane (HMS-301R available from Gelest Inc., Morrisville, PA), an inhibitor (e.g. 1,3,5,7 - tetravinyl - ,3,5,7 - tetramethylcyclotetrasiloxane available from United Chemical Technologies, Inc. (UCT), Bristol, PA) and a thermally activated hydrosilation catalyst (Pt(0) - 1,3 - divinyl - 1,1,3,3 - tetramethyl disiloxane available from Aldrich Chemical Company Inc., Milwaukee, WI). The compositions are essentially duplicates containing 10ppm inhibitor and 2ppm catalyst. Values of adhesion, measured with reference to polycarbonate, show significant variation from as low as 0.29 N/100mm (8 g/in) to 3.08 N/100mm (80 g/in). Examples 6-8 show improvement in adhesion to plastic with increasing amount of thermally activated hydrosilation catalyst.

## TABLE 1 - Thermally Cured Sealant Compositions

|  | 1 | 2 | 3 | 4 | 5 |
|---|---|---|---|---|---|
| Vinyl siloxane wt% | 14.8% | 14.8% | 14.8% | 14.8% | 14.8% |
| Hydrogen siloxane wt% | 1.2% | 1.2% | 1.2% | 1.2% | 1.2% |
| Silicone Oil wt% | 84.0% | 84.0% | 84.0% | 84.0% | 84.0% |
| Inhibitor ppm | 10ppm | 10ppm | 10ppm | 10ppm | 290ppm |
| Catalyst ppm | 2ppm | 2ppm | 2ppm | 2ppm | 88ppm |
| Adhesion N/100mm (g/in) | 0.29 (7.62) | 1.18 (30.48) | 0.96 (25) | 0.89 (23) | 3.08 (79.5) |

### TABLE 1 continued - Thermally Cured Sealant Compositions

|  | 6 | 7 | 8 |
|---|---|---|---|
| Vinyl siloxane wt% | 14.8% | 14.8% | 14.8% |
| Hydrogen siloxane wt% | 1.2% | 1.2% | 1.2% |
| Silicone Oil wt% | 84.0% | 84.0% | 84.0% |
| Inhibitor ppm | 100ppm | 200ppm | 290ppm |
| Catalyst ppm | 5ppm | 25ppm | 50ppm |
| Adhesion N/100mm (g/in) | 1.37 (36) | 1.94 (56.5) | 2.26 (59.6) |

Example 9 to Example 16 - Photocured Sealant Compositions

Table 2 provides compositions for curable silicone compositions containing a silicone oil (BAYSILONE fluids M40 - M899 available from GE/Bayer Silicones GmbH, Leverkusen, Germany), a vinyl substituted polysiloxane (SILOPREN U65 available from GE/Bayer Silicones, Ekrath, Germany), a hydrogen substituted polysiloxane (HMS-301R available from Gelest Inc., Morrisville, PA), and a hydrosilation photocatalyst (Photocatalyst E). The compositions include duplicates and change in photocatalyst between 8ppm and 80ppm. Values of adhesion, measured with reference to polycarbonate, are higher than those obtained with thermally cured viscous sealants and measurements show less variability between 2.0 N/100mm (60 g/in) and 4.0 N/100mm (100 g/in). Photocured silicone compositions show the same trend towards increasing adhesion as the amount of catalyst in the photocurable sealant composition increases. Examples 14-16 provide adhesion results showing this trend.

## TABLE 2 - Photocured Sealant Compositions

|  | 9 | 10 | 11 | 12 | 13 |
|---|---|---|---|---|---|
| Vinyl siloxane wt% | 14.8% | 14.8% | 14.8% | 14.8% | 14.8% |
| Hydrogen siloxane wt% | 1.2% | 1.2% | 1.2% | 1.2% | 1.2% |
| Silicone Oil wt% | 84.0% | 84.0% | 84.0% | 84.0% | 84.0% |
| Catalyst ppm | 78ppm | 78ppm | 79ppm | 7.7ppm | 78ppm |
| Adhesion N/100mm (g/in) | 2.25 (58.42) | 3.82 (99.06) | 3.09 (80) | 3.51 (91) | 3.88 (100.5) |

## TABLE 2 continued - Photocured Sealant Compositions

|  | 14 | 15 | 16 |
|---|---|---|---|
| Vinyl siloxane wt% | 14.8% (2.99) | 14.8% (2.99) | 14.8% (2.96) |
| Hydrogen siloxane wt% | 1.2% (0.24) | 1.2% (0.24) | 1.2% (0.23) |
| Silicone Oil wt% | 84.0% (16.98) | 84.0% (16.98) | 84.0% (16.81) |
| Inhibitor ppm | 10ppm | 10ppm | 10ppm |
| Catalyst ppm | 5ppm | 25ppm | 50ppm |
| Adhesion N/100mm (g/in) | 1.86 (49.5) | 2.81 (74.0) | 3.33 (87.5) |

Example 17 and Example 18 - Adhesion of Photocured Sealant Compositions to PBT

Table 3 provides evidence that an increase in adhesion to plastic is not limited to polycarbonate resins but a similar increase occurs when adhesive compositions according to the present invention are photocured in contact with PBT.

TABLE 3 - Adhesion to Polybutylene Terephthalate (PBT)

|  | 17 | 18 |
|---|---|---|
| Vinyl siloxane wt% | 14.8% | 14.8% |
| Hydrogen siloxane wt% | 1.2% | 1.2% |
| Silicone Oil wt% | 84.0% | 84.0% |
| Inhibitor ppm | 100ppm |  |
| Thermal Catalyst ppm | 5ppm |  |
| Photo-Catalyst ppm |  | 5ppm |
| Adhesion N/100mm (g/in) | 1.94 (56.5) | 3.11 (90.5) |

As required, details of the present invention are disclosed herein; however, it is to be understood that the disclosed embodiments are merely exemplary. Therefore, specific structural and functional details disclosed herein are not to be interpreted as limiting, but merely as a basis for the claims and as a representative basis for teaching one skilled in the art to variously employ the present invention.

**Claims**

1. An apparatus **(10)** for measuring adhesion of a gelled polymer to a surface, said apparatus comprising:

   a support **(14)** having opposing ends and further including a low friction contact surface **(16);**
   a clamp **(22)** spaced apart from one of said opposing ends of said support **(14);**
   a blade including a knife-edge **(20)** aligned in a horizontal plane, said blade held rigidly by said clamp **(22)** to make an angle with said horizontal plane of less than 25°;
   a block **(18)** having a planar contact face **(44)** adapted for sliding contact with said low friction contact surface, said planar contact face **(44)** occupying a position in said horizontal plane;
   a layer of the gelled polymer **(42)** having an adhesive bond to said planar contact face **(44)** to form an interface **(46)** therewith;
   a connection **(26)** from said block **(18)** to a motion generator **(24)** to produce vertical movement of said connection **(26),** said motion generator **(24)** including a force measuring gauge; and
   a motion converter **(28)** to alter said vertical movement to a horizontal movement to slidingly move said block **(18)** along said support **(14)** towards said clamp **(22)** to cause said knife-edge **(20)** to penetrate said interface **(46)** to disrupt said adhesive bond, said force measuring gauge indicating the strength of said adhesive bond.

2. The apparatus of claim 1, further including a base **(12)** having said support attached directly thereto.

3. The apparatus of claim 2, wherein said support **(14)** is an elongate support further including a first rail opposite a second rail and parallel therewith, said first rail and said second rail each including a low friction coating to provide said low friction contact surface **(16)** for sliding contact of said planar contact face **(44).**

4. The apparatus of claim 2, wherein said clamp **(22)** is secured to said base **(12)** said clamp including a first beam opposite a second beam and parallel thereto.

**Patentansprüche**

1. Vorrichtung (10) zum Messen der Adhäsion eines Polymergels an einer Fläche, wobei die Vorrichtung aufweist:

   einen Träger (14), der gegenüberliegende Enden und ferner eine Kontaktfläche (16) mit niedriger Reibung (16) aufweist;
   eine Klemmvorrichtung (22), die beabstandet zu einem der gegenüberliegenden Enden des Trägers (14) angeordnet ist;
   ein Messer, das eine Schneidkante (20) aufweist, die in einer horizontalen Ebene ausgerichtet ist, wobei das Messer von der Klemmvorrichtung (22) starr gehalten wird, um einen Winkel mit der horizontalen Ebene von weniger als 25° zu bilden;
   einen Block (18) mit einer planaren Kontaktfläche (44), die zum gleitenden Kontakt mit der Kontaktfläche mit niedriger Reibung geeignet ist, wobei die planare Kontaktfläche (44) eine Position in der horizontalen Ebene einnimmt;
   eine Schicht des Polymergels (42) mit einer Klebeverbindung zu der planaren Kontaktfläche (44), um eine Grenzfläche (46) damit zu bilden;
   eine Verbindung (26) von dem Block (18) zu einem Bewegungserzeuger (24), um vertikale Bewegung der Verbindung (26) zu produzieren, wobei der Bewegungserzeuger (24) ein Kraftmessgerät aufweist; und
   einen Bewegungsumwandler (28), um die vertikale Bewegung in eine horizontale Bewegung umzuwandeln, um den Block (18) entlang des Trägers (14) in Richtung der Klemmvorrichtung (22) gleitend zu bewegen, um zu verursachen, dass die Schneidkante (20) in die Grenzfläche (46) eindringt, um die Klebeverbindung zu trennen, wobei das Kraftmessgerät die Festigkeit der Klebeverbindung anzeigt.

2. Vorrichtung nach Anspruch 1, die ferner eine Basis (12) aufweist, wobei der Träger direkt daran angebracht ist.

**3.** Vorrichtung nach Anspruch 2, wobei der Träger (14) ein verlängerter Träger ist, der ferner eine erste Schiene, die einer zweiten Schiene gegenüberliegt und parallel dazu verläuft, aufweist, wobei die erste Schiene und die zweite Schiene jeweils eine Beschichtung mit niedriger Reibung aufweisen, um die Kontaktfläche (16) mit niedriger Reibung zum gleitenden Kontakt mit der planaren Kontaktfläche (44) bereitzustellen.

**4.** Vorrichtung nach Anspruch 2, wobei die Klemmvorrichtung (22) an der Basis (12) fest angebracht ist, wobei die Klemmvorrichtung einen ersten Tragebalken, der einem zweiten Tragebalken gegenüberliegt und parallel dazu verläuft, aufweist.

**Revendications**

**1.** Appareil (10) pour mesurer l'adhérence d'un polymère gélifié sur une surface, ledit appareil comprenant :

un support (14) doté d'extrémités opposées et comprenant en outre une surface de contact (16) à faible frottement,
une fixation (22) située à distance de l'une desdites extrémités opposées dudit support (14),
une lame qui comprend une arête (20) de couteau alignée dans un plan horizontal, ladite lame étant immobilisée par ladite fixation (22) de manière à former un angle inférieur à 25° avec ledit plan horizontal,
un bloc (18) qui présente une surface de contact plane (44) adaptée pour être en contact coulissant avec ladite surface de contact à faible frottement, ladite surface de contact plane (44) occupant une position dans ledit plan horizontal,
une couche de polymère gélifié (42) reliée par adhésion à ladite surface de contact plane (44) pour former une interface (46) avec cette dernière,
une liaison (26) entre ledit bloc (18) et un générateur de déplacement (24) qui déplace verticalement ladite liaison (26), ledit générateur de déplacement (24) comprenant une jauge de mesure de force, et
un convertisseur (28) de déplacement qui convertit ledit déplacement vertical en un déplacement horizontal destiné à déplacer ledit bloc (18) le long dudit support (14) par coulissement vers ladite fixation (22) pour amener ladite arête (20) de couteau à pénétrer dans ladite interface (46) en vue de rompre ladite liaison d'adhérence, ladite jauge de mesure de force indiquant la résistance de ladite liaison d'adhérence.

**2.** Appareil selon la revendication 1, qui comprend en outre une base (12), sur laquelle ledit support est fixé directement.

**3.** Appareil selon la revendication 2, dans lequel ledit support (14) est un support allongé qui comprend en outre un premier rail qui fait face à un deuxième rail et qui est parallèle à ce dernier, ledit premier rail et ledit deuxième rail comprenant chacun un revêtement à faible frottement qui permet à ladite surface de contact (16) à faible frottement d'être en contact coulissant avec ladite surface de contact plane (44).

**4.** Appareil selon la revendication 2, dans lequel ladite fixation (22) est fixée sur ladite base (12), ladite fixation comprenant une première poutre qui fait face à une deuxième poutre et qui est parallèle à cette dernière.

**FIG. 1**

**FIG. 2**

**FIG. 3**